# EUROPEAN PATENT SPECIFICATION

(11) **EP 0 369 404 B1**
(45) Date of publication and mention of the grant of the patent: **20.07.1994**
(21) Application number: 89121076.7
(22) Date of filing: 14.11.1989
(51) Int. Cl.: F16K 31/34, F16K 47/02

(54) **Valve for filling a water cistern of a flushing toilet**
Füllventil für einen Toiletten-Spülkasten
Vanne de remplissage d'un réservoir de chasse d'eau

(30) Priority: 14.11.1988 YU 2108/88
(43) Date of publication of application: 23.05.1990
(73) Proprietor: GORENJE METALPLAST industrijsko podjetje Ruse p.o., SI-62342 Ruse (SI)
(72) Inventor: Vogrinec, Ludvik, SI-62342 Ruse (SI)
(74) Representative: Füchsle, Klaus, Dipl.-Ing.

(56) References cited:
- EP-A- 0 051 043
- AU-B- 533 786
- GB-A- 1 540 082
- US-A- 4 562 859

## Description

The invention relates to a valve for filling a water cistern of a flushing toilet, as known from GB-A-1 540 082

Near the flushing toilet bowl there is usually arranged in the toilet cell a water cistern, which is by means of a filling valve connected to the water supply piping and by means of a discharge valve connected to a draining pipe, by which the water cistern is interconnected with the toilet bowl. In some places an upper (allowable) limitation of generated noise is permitted besides, to be competitive on the market, one is obliged to reduce the level of generated noise practically to inaudibility.

From DE 34 00 552 A1 a supply valve for a flushing toilet cistern is known through operation of which according to the statements in the document "minimum" noise is generated. For this purpose the components of the valve are arranged and interconnected in such manner that the water stream delivered by the supply piping initially flows upwardly in a first annular chamber where it helically encircles the mantle surface of a central delivery pipe. It thereupon flows in the same direction as on the intake side, yet on the other side of the delivery pipe it strikes a valve diaphragm arranged essentially diametrally opposite the intake fitting, whereupon the water stream is deflected at an acute angle entirely backwards against the inlet direction and upwardly, entering a second annular chamber arranged immediately above the first annular chamber, and finally tangentially leaving said annular chamber and in the form of a vortex entering the inside of the delivery pipe through which it helically streams into the cistern essentially under the influence of gravitation.

Obviously, by means of the given series of multiple alterations of the direction and of the cross-sections of the water stream the kinetic energy of the stream is reduced. Additionally, possible striking of the water stream perpendicularly to a wall, which might generate noise, avoided. Although in the document there is a stated advantage that only a few components, which can be incorporated without a tool, are in question, for a person skilled in the art it is obvious that a small number of components is achieved by combining the elements to a monolithic assembly, i.e. it is achieved by providing extremely complicated tools for casting in plastics the main parts of the valve.

Among the valves of the kind set forth above there is further known from DE 26 11 119 A1 a solution characterized by a low number of components, for manufacturing of which, however, in comparison with the solution analyzed above, less complicated tools are needed. The diaphragm assembly of this known solution is incorporated immediately between the inlet duct and the outlet duct of the valve; thus, said valve keeps all the properties of common diaphragm valves. Disadvantageously, in the analyzed valve no measures have been taken to suppress the noise on streaming water through the valve into the cistern.

It is the aim of the invention to combine the properties of the valve first mentioned above, which lead to a noiseless operation, as well as those of the second-mentioned valve, which lead to a simple correlation of the components in construction sense and to simple tools for manufacturing the components.

According to the present invention a valve for filling a water cistern of a flushing toilet is as defined in the accompanying Claim 1. It will be noted that Claim 1 has been divided into a two-part form. This division has not been made with respect to either to the two prior arts already mentioned above but with respect to a third prior art, namely GB-A-1 540 082. This third prior art discloses a flow control device for use in controlling the filling, for example, of a water cistern. One of its features is that in the water inlet tube fitting to the flow control device there is a conical filter basket having its smaller and closed end facing upstream; and its large and open end facing downstream. This known basket has a radially outwardly extending flange at its open end that is clamped between the water inlet tube and a float controlled shut-off valve to which said water inlet tube is connected.

The pre-characterizing part of Claim 1 contains the few features thereof that are already known from GB-A-1 540 082. Claim 1 is thus distinguished over GB-A-1 540 082 by all of the features defined in the characterizing part of the claim.

Generally, the valve according to the invention can be realized by different materials and construction manners dependent upon the materials chosen, which inevitably also conditions the representation of the invention in the drawing. Without excluding other possible embodiments, the invention is described below in more detail on the basis of a preferred embodiment of the invention which mainly consists of plastics and which is shown in the attached drawing. In the drawings:
- Fig. 1: is a sectional elevation of a valve according to the invention, in closed condition;
- Fig. 2: is a sectional view along line II-II of Fig. 1, which involves a small drawing irregularity explained below;
- Fig. 3: is a sectional elevation of the inlet part of the valve of Fig. 1 in an enlarged scale;
- Fig. 4: is a sectional elevation of a striker element of Fig. 3 in a further enlarged scale; and
- Fig. 5: is a plan view of a bearing for the interconnection of a two-armed lever and a spindle shaft of the valve of Fig. 1, in an enlarged scale.

According to the invention the valve body 1 is composed of a delivery section 2 and a diaphragm section 3, the system axes of which are arranged crosswisely, whereby the delivery and the diaphragm sections 2, 3 are mutually connected, in the given case connected by means of a medium rib 4, by means of lateral ribs 5, 6, one of which, in the given case rib 6, is in the area of a cover plate 7 of the delivery section 2 built as a junction passage 8 between the delivery and the diaphragm sections 2, 3 of the valve body 1, and by means of the cover plate 7 as such, which on the appropriate location projects beyond the border of the delivery section 2 to the diaphragm section 3.

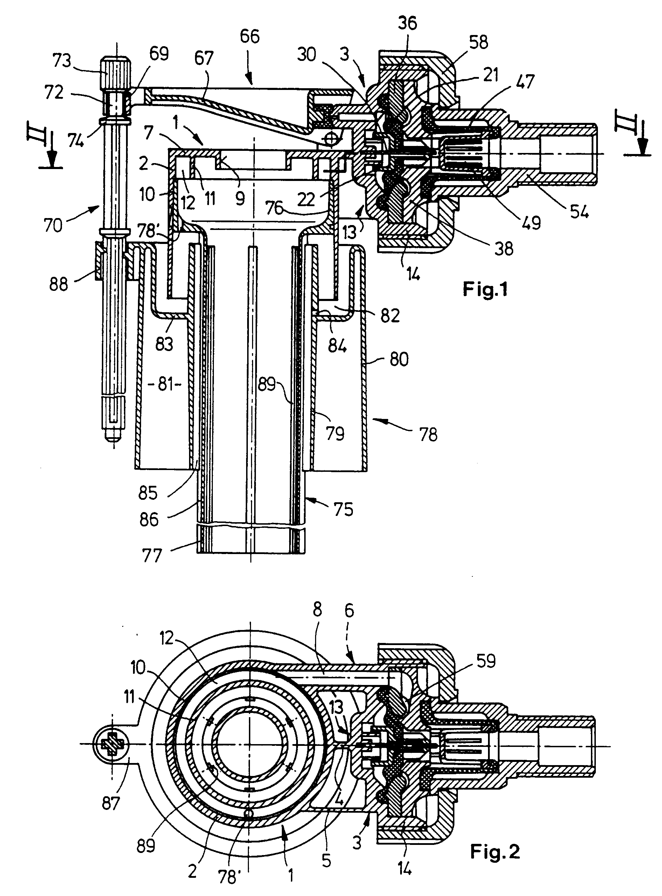

Centrally located in the cover plate 7 of the delivery section 2 of the valve body 1 is an opening 9, which is vertically annularly reinforced. Between a peripheral wall 10 of the delivery section 2 and the reinforcement ring of the opening 9 there is attached to the cover plate 7 a collar wall 11, which in combination with the peripheral wall 10 and the cover plate 7 forms a downwardly open annular duct 12, to which there is tangentially connected a junction passage 8 as is evident from Fig. 2.

The diaphragm section 3 of the valve body 1 is essentially composed of a stepped diskoid base 13 and a screw shoulder 14.

The stepped diskoid base 13 comprises a central disk section 15, which is located closest to the delivery section 2, and a rim section 16, which is essentially for a thickness of the central disk section 15 removed from the delivery section 2 and i.a. interconnects the central section 15 of the stepped diskoid base 13 and the screw shoulder 14 of the diaphragm section 3 of the valve body 1.

Projecting from the central disk section 15 in the direction away from the delivery section 2 are a centrally located tubular projection 17 and, surrounding the latter at a distance and coaxially thereto, an annular projection 18 provided with a longitudinal slot 19.

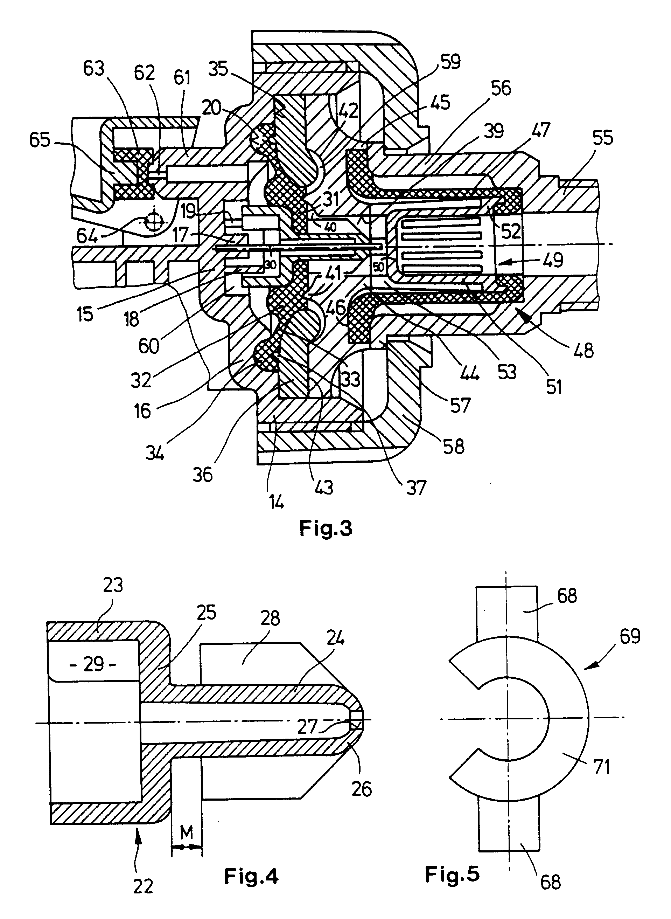

In the rim section 16 of the stepped diskoid base 13 is foreseen an annular groove 20, which in axial section essentially provides a semicircle-shaped cross-section. In the groove 20 a rim bulge 34 of a centrally bored diskoid diaphragm 21 is inserted, through the central bore of which diaphragm a diaphragm striker 22 (particularly evident from Fig. 4) is inserted and fixed therein by means of form-locking.

The diaphragm striker 22 is composed of a unilaterally open cylinder section 23 and a sleeve section 24, which is centrally attached to a base 25 of the cylinder section 23 on the outer side thereof. At its free end the sleeve section 24 terminates by a spherical part 26, which is provided with a central bore 27, the diameter of which is smaller than the inside diameter of the sleeve section 24. Along the mantle surface of the sleeve section 24 are located four wings 28, which terminate at a distance M before the base 25 of the cylinder section 23, whereat the distance M corresponds to the thickness of the diaphragm 21 at the respective location. To facilitate the insertion of the striker 22 into the diaphragm 21, the wings 28 are chamfered on the side of the spherical part 26. The diameter of the central bore of the diaphragm 21 and the outer diameter of the sleeve section 24 correspond to each other, the diameter of the central bore 27 being greater than that of a needle 30 passing therethrough for the purpose of providing a loose fitting. The diameter of the tubular projection 17 and the inner diameter of the cylinder section 23 are such as to loosely accommodate the annular projection 18 therebetween.

Located inside the cylinder section 23 is a longitudinal rib 29, which is inserted by loosely fitting into the longitudinal slot 19 of the annular projection 18.

The diaphragm striker 22 is by bore 27 placed onto a needle 30, which is tightly inserted, preferably integrally cast, into the tubular projection 17.

The diaphragm 21 comprises a flat central part 31, which covers the mantle surface of the base 25 of the cylinder section 23. To the flat central part 31 is connected an inner annular bulge 32, which, projects from the plane surface of the central part 31 circumferentially along the mantle surface of the cylinder section 23, which is thereby embraced to approx. one third of the axial extent. In the area of the greatest diameter of the annular bulge 32 there is attached thereto a flexible, i.e. hinge-like part 33 of the diaphragm 21, and to the hinge-like part 33 there is attached a rim bulge 34, which is oriented from the plane of the hinge part 33 to the rim section 16 of the diskoid base 13, into the groove 20 whereof the rim bulge 32 is inserted.

An annular step 35, which is foreseen between the groove 20 and the screw shoulder 14, is covered by a flat annular insertion 36, which in the radial direction also extends beyond the rim bulge 34 and the hinge part 33 of the diaphragm 21 and terminates on the inner annular bulge 32 where the inner part of the insertion 36 is circumferentially bent from the matching surfaces between the insertion 36 and the diaphragm 21 in the direction away from the diaphragm 21 under an angle of approx. 30°. The inner rim of the insertion 36 is rounded along its circumference, which results in a similarity of the axial-sectional elevations of the inner bulge 32 and the matching part of the insertion 36 with both elements oriented apart. In the area of the rim bulge 34 the insertion 36 is provided with an impressing annular rib projection 37.

Onto the flat annular part of the insertion 36 and onto the rear side of the inner bulge 32 of the diaphragm 21 a grooved ring 38 is placed, which is centrally bored and with its central bore 39 by loosely fitting put on the wings 28 of the diaphragm striker 22. The side of the ring 38, which is oriented to the diaphragm 21 and to the insertion 36, comprises four main parts. On the muzzle of the bore 39 is foreseen a circular spherical depression 40; furtheron there is in the direction riadially outwards arranged an axially reinforced annular cam 41, which supports the diaphragm 21; next to the cam 21 there is radially outwards foreseen an annular groove 42, which is in axial section essentially shaped as a semicircle and is located in front of the rounded inner rim of the insertion 36; finally, annexed to the groove 42 is a flat flange 43, which coincides with the flat part of the insertion 36. The other side of the ring 38 comprises an inner supporting hub 44, which defines the bore 39, an outer supporting ring 45 and, located therebetween, an annular bedding 46 in the form of a depression. Into the latter is inserted a radially outwards oriented flange part of an elastic sleeve 47, which is provided with longitudinal ribs on its outer mantle surface, the other end of which sleeve is magnified radially inwards, thereby forming a bedding 48 for an inlet basket 49. The latter comprises a bottom part 50, which essentially abuts the free end of the needle 30, a mantle wall 51, which is provided with longitudinal slots, and a base 52, which is supported by the bedding 48 of the sleeve 47, as well as longitudinal ribs 53, preferably four of them, which are situated between the slots of the mantle wall 51 and extending from the base 52 to beyond the bottom part 50, terminating as small columns, where said small columns by their free ends abut against the hub 44 of the grooved ring 38.

The assembly of the basket 49 and the sleeve 47 is inserted into an inlet tube fitting 54, which comprises a threaded coupling 55 and a cylindrical section 56, which terminates by a radially outwards oriented flange portion 57. On the changing part between the coupling 55 and the cylindrical section 56, wherein both the inner and the outer diameter of the cylindrical section 56 are greater than the ones of the coupling 55 there is inside foreseen a bedding for the sleeve 47. The flange portion 57 is supported by the outer supporting ring 45 of the grooved ring 38 and it clamps a part of the flange section of the sleeve 47, which is thereby partly elastically deformed. The inner diameter of the cylindrical section 56 of the fitting 54 is matched to the outer diameter over longitudinal ribs of the sleeve 47.

A screw cap 58 is placed over the fitting 54 and is pressed against the flange portion 57 of the fitting 54 and tightened to the screw shoulder 14 of the diaphragm section 3 of the valve body 1.

The groove 42 of the ring 38 and the rounded inner rim of the insertion 36 form an annular channel 59, which in axial cross-section resembles a sickle. As evident from Fig. 2, to the channel 59 is through the insertion 36 connected a junction passage 8. For this purpose the position of the insertion 36 and the one of the grooved ring 38 are rotationally fixed.

In order to avoid ambiguity it is to be noted that the insertion 36 and the grooved ring 38 are swung in a manner that the outlet duct bend (Fig. 2), which interconnects the channel 59 with the junction passage 8, is arranged in the level of the passage 8, which as such is horizontal, i.e., said outlet duct bend is, in fact, located below the system axis of the diaphragm section 3 and not according to the section indication II-II of Fig. 1, which is drawn through the system axis of the diaphragm section 3.

The inside of the diaphragm striker 22, to which a clearance-type admittance is foreseen along the needle 30 and the bore 27, and hereafter the diaphragm 21 itself, on one hand, and the diskoid base 13 of the diaphragm section 3 of the valve body 1, on the other hand, form a pressure chamber 60 from which there is led at a height distance above the cover plate 7 in parallel to the system axis of the diaphragm section 3 a valve tube projection 61 (Figs. 1, 3). Therefrom there is through its free end, which is essentially closed, led a comparatively small bore 62, the outer muzzle or discharge orifice whereof is intermittently covered by a matched, preferably elastically matched stop lid 63. Said stop lid is arranged on a perpendicular short arm 65 of a two-armed lever 66, which short arm is swingable around a horizontal swivel pin 64 and a second arm 67 of the two-armed lever being situated essentially horizontally along the diameter of the cover plate 7 and beyond the latter. In the preferred embodiment, the swivel pin 64 is located between the tube projection 61 and the cover plate 7 at the free end of the shorter arm 65 in the plane situated perpendicularly and facing the muzzle of the capillary bore 62.

The free end of the longer arm 67 of the two-armed lever 66 is fork-shaped. In each leg of the unshown fork is located a bearing for the receipt of journals 68 of a swinging bearing 69 (Fig. 5) aimed for an interconnection of the tie-armed lever 66 and a spindle shaft 70. In the given case, said interconnection is form-locking, for which aim elastic and other properties of the chosen material are utilized, which results in that for the completion of the interconnection merely two components are applied, i.e. the spindle shaft 70 and the swinging bearing 69. For this purpose the latter comprises an approx. 270-degree-annular section 71, which is at assembling with the spindle shaft 70 able to be sufficiently elastically spread to thereby enable the insertion by snapping a journal part 72 of the spindle shaft 70.

The journal part 72 of the spindle shaft 70 is upwards and downwards limited by cylindrical enlargements 73, 74. For the rest, the spindle shaft 70 is constructed as a cross-profile with the legs of the cross-profile being cut to form a screw thread along the prevailing section of the length, with the screw thread ending by a complete helix at the lower end of the spindle shaft 70.

Into the peripheral wall 10 of the valve body 1 is inserted a delivery tube 75, which is incorporated by shifting from below and which comprises an upper part 76, which is as to dimension adapted to the peripheral wall 10, as well as a lower part 77, which has a smaller diameter, but is several times longer than the upper part 76. The top edge of the upper part 76 is in the given case levelled with respect to the lower edge of the collar wall 11. The delivery tube 75 is spatially fixed with regard to the peripheral wall 10. On the transition of the upper part 76 to the lower part 77 of the delivery tube 75 there is diametrally opposite the delivery muzzle of the junction passage 8 (Fig. 2) essentially next to the wall of the upper part 76 foreseen a perpendicular leaking bore 78'.

Put onto the lower part 77 of the delivery tube 75 from below is a swimmer 78. It comprises mutually coaxial, regarding the length thereof eseentially equal cylinders 79, 80, which are open downwards, whereas only the inner cylinder 79 is open upwards, however, the outer cylinder 80 is at its upper edge bent inwards and then bent downwards in parallel to itself up to a depth equal to the free length of the peripheral wall 10 under the upper part 76 of the delivery tube, whereupon it is by means of a horizontal ring section connected to the inner cylinder 79. Consequently, between the cylinders 79, 80 there exist: below, a great buoying chamber 81 and, above, a small burdening chamber 82. From the latter there is led next over its bottom part 83 to the inside of the cylinder 79 a small draining bore 84.

The location of the swimmer 78 is in rotational manner fixed to the delivery tube 75, in the given case by means of interaction of longitudinal inner ribs 85 of the swimmer 78 and longitudinal grooves 86 on the mantle surface of the lower part 77 of the delivery tube 75.

In the area of the upper edge of the outer cylinder 80 the swimmer 78 is provided with a radially projecting appendix 87, which under consideration of the above-defined interconnection with the delivery tube 75 resides in the area of the spindle shaft 70 and is built as a nut 88, in the given case with a single 360-degree-helix, into which the spindle shaft 70 is screwed.

Along the inner mantle surface of the lower part 77 of the delivery tube 75 there are arranged ribs 89.

Initially, the swimmer 78, due to its own weight and the weight of the elements connected thereto, is in its lowered position, in which the arm 67 of the two-armed lever 66 rests upon the cover plate 7 of the delivery section 2. The stop lid 63 is removed from the muzzle of the capillary bore 62.

After the valve of the water supply piping of the flushing toilet has been opened, water flows in through the inlet fitting 54 into the basket 49, then throttled through longitudinal slots of the basket 49 in cells formed by the mantle wall 51 of the basket 49, sleeve 47 and ribs 53 of the basket 49, then flooding the wings 28 of the diaphragm striker 22 and at the same time striking the diaphragm 21 itself as well as penetrating through the annular gap formed between the needle 30 and the bore 27 of the diaphragm striker 22 into the pressure chamber 60 located beyond the diaphragm 21. Since at this moment in the pressure chamber 60 there prevails no counterpressure, water shifts the diaphragm 21 and therewith its striker 22 along the needle 30 and the annular projection 18 away from the annular cam 41 and invades the channel 59 and thereafter through the junction passage 8 invades the annular duct 12, wherefrom it flows off gravitationally in the form of a vortex into the delivery tube 75 and, finally, collects in the flushing cistern not shown. Simultaneously with the flowing as set above, a small quantity of the water stream under the influence of the kinetic energy of the stream squirts through the leaking bore 78' into the burdening chamber 82 of the swimmer 78, wherefrom it, in fact, at the same time flows off through the draining bore 84, yet slower than it flows in. This results in that simultaneously with the raising of the level of water in the flushing cistern the burdening chamber 82 is filled tip with water, the swimmer 78 becomes heavier, or in other words it becomes less buoyant, and the movement thereof against the upper termination of its shifting thus calms down.

The swimmer 78 raising, simultaneously the two-armed lever 66 is shifted by means of the spindle shaft 70; the stop lid 63 approaches the muzzle of the capillary bore 62, which finally gets closed. Water, which has meanwhile penetrated, now generates a system pressure in the pressure chamber 60, the force of which prevails on the basis of the greater area of the diaphragm 21 on the side of the pressure chamber 60 against the force acting on the inlet side of the diaphragm 21, which results in that the diaphragm 21 rests upon the annular cam 41, thus interrupting the connection between the tube fitting 54 and the channel 59.

When the flushing cistern is discharged through the discharge valve, the swimmer 78 falls to the lower termination, the capillary bore 62 is released and the pressure in the pressure chamber 60 drops, i.e., the valve is again in a condition as at starting.

The measurements on a prototype have shown that the valve as set above is noticeably the most silent among known "noiseless" valves on the market.

Reference signs in the claims are intended for better understanding and shall not limit the scope.

## Claims

1. A valve for filling a water cistern of a flushing toilet, said valve comprising a water inlet tube fitting (54); a basket (49) within said tube fitting (54); and a diaphragm section (3) downstream of the basket (49);
**characterized** by
(a) said basket (49) having on the outer mantle surface thereof a plurality of axially extending ribs (53) arranged between slots formed in the basket; said basket having an open upstream end and a closed downstream end; and
(b) an elastic sleeve (47) surrounding said basket (49); said elastic sleeve (47) being provided on its outer mantle surface with a series of axially extending ribs, said ribs resting on the inner cylindrical surface of a cylindrical section (56) of said tube fitting (54);
said basket (49) and said elastic sleeve (47) acting as a noise-damping element.

2. A valve as in Claim 1 and wherein said diaphragm section (3) comprises at its downstream end a stepped diskoid base (13) and at its upstream end a grooved ring (38), there being an annular insertion (36) and a diaphragm (21) between said grooved ring (38) and said diskoid base (13); and
a diaphragm striker (22) that is centrally mounted in the diaphragm (21) by form-locking;
the arrangement being such that a screw cap (58), through which said tube fitting (54) extends, can threadedly engage with the stepped diskoid base (13) to hold the grooved ring (38), the annular insertion (36) and the diaphragm (21) in position between said tube fitting (54) and said stepped diskoid base (13).

3. Valve according to claim 2, characterized in that the diaphragm striker (22) is at one of its ends guided along a centrally located needle (30) fixed in a disk section (15) of the stepped diskoid base (13) and at the other end guided along an annular projection (18) located on a disk section (15) of the stepped diskoid base (13) coaxially with the needle (30).

4. Valve according to claim 3, characterized in that the stepped diskoid base (13) and the diaphragm (21) encase a pressure chamber (60), which is by an annular gap between the needle (30) and a central bore (27) of the diaphragm striker (22) open to the tube fitting (54), and by a tube projection (61), which projects from the stepped diskoid base (13) into an area above a delivery section (2), open to the outside of the valve.

5. Valve according to claim 2 or 3, characterized in that an inner rounded rim of the annular insertion (36) and an annular groove (42), which is situated on the side oriented to the annular insertion (36), of the grooved ring (38) encase an annular channel (59), which is connected with a junction passage (8) located on the height of a cover part of a delivery section (2) in parallel to the inlet system axis of the valve and which can with the inlet side of the valve be connected by an intermittent annular passage between the diaphragm (21) and an annular cam (41) of the grooved rim (38).

## Patentansprüche

1. Ein Ventil zum Füllen eines Spülkastens eines Wasserklosetts, enthaltend ein Wassereinlass-Rohrverbindungsstück (54), einen in diesem angeordneten Korb (49) und eine in bezug auf diesen Korb (49) stromabwärts angeordnete Schwingwand-Beugruppe (3), *dadurch gekennzeichnet*,
(a) dass der Korb (49) an seiner Aussenmantelfläche eine Mehrzahl von axial verlaufenden Rippen (53), die zwischen den in der Korbwand vorgesehenen Langlöchern angeordnet sind, und einen offenen, stromaufseitigen Endabschnitt sowie einen geschlossenen, stromabseitigen Endabschnitt aufweist; und
(b) dass eine den Korb (49) umgebende nachgiebige Hülse (47) vorhanden ist, die an ihrer Aussenmantelfläche eine Reihe von axial verlaufenden Rippen aufweist, die auf einer inneren, zylindrischen Fläche eines Zylinderabschnitts (56) des Wassereinlass-Rohrverbindungsstücks (54) aufliegen,
wobei der Korb (49) und die nachgiebige Hülse (47) als ein schalldämpfendes Element wirken.

2. Ein Ventil wie im Anspruch 1 und worin die Schwingwand-Baugruppe (13) an ihrem stromabseitigen Ende eine abgestufte scheibenförmige Grundplatte (13) und an ihrem stromaufseitigen Ende einen gerillten Ring (38) enthält, wobei zwischen dem Ring (38) und der abgestuften scheibenförmigen Grundplatte (13) ein ringförmiger Einsatz (36) und eine Schwingwand (21) eingesetzt sind, und
ein Schwingwand-Mitnehmer (22) vorgesehen ist, der mittig in der Schwingwand (21) formschlüssig gehalten wird,
wobei die Einrichtung eine solche Anordnung aufweist, dass eine Schraubkappe (58), durch die das Wassereinlass-Rohrverbindungsstück (54) ragt, zwecks Haltens des gerillten Ringes (38), des ringförmigen Einsatzes (36) und der Schwingwand (21) in der Lage zwischen dem Wassereinlass-Rohrverbindungsstück (54) und der abgestuften scheibenförmigen Grundplatte (13) auf die abgestufte scheibenförmige Grundplatte (13) aufschraubbar ist.

3. Ein Ventil nach Anspruch 2, *dadurch gekennzeichnet*, dass der Schwingwand-Mitnehmer (22) an einem seiner Enden längs einer mittig angeordneten Nadel (30), die in einem Scheibenabschnitt (15) der abgestuften scheibenförmigen Grundplatte (13) festgehalten wird, und an seinem anderen Ende längs eines ringförmigen Ansatzes (18) geführt ist, der auf dem erwähnten Scheibenabschnitt (15) der abgestuften scheibenförmigen Grundplatte (13) koaxial mit der Nadel (30) angeordnet ist.

4. Ein Ventil nach Anspruch 3, *dadurch gekennzeichnet*, dass die abgestufte scheibenförmige Grundplatte (13) und die Schwingwand (21) eine Druckkammer (60) bilden, die über ein ringförmiges Spiel zwischen der Nadel (30) und einem mittigen Loch (27) des Schwingwand-Mitnehmers (22) zum Wassereinlass-Rohrverbindungsstück (54) offen ist und über einen Rohransatz (61), der von der abgestuften scheibenförmigen Grundplatte (13) in einen Bereich über einem Auslieferungsteil (2) ragt, zur Ventil-Aussenseite hin offen ist.

5. Ein Ventil nach Anspruch 2 oder 3, *dadurch gekennzeichnet*, dass eine innere abgerundete Randfassung des ringförmigen Einsatzes (36) und eine Ringrille (42) des gerillten Ringes (38), die an der zum ringförmigen Einsatz (36) weisenden Seite angeordnet ist, einen Ringkanal (59) bilden, der mit einer Verbindungsleitung (8) in Verbindung steht, die in der Höhe eines Deckelteils des Auslieferungsteils (2) parallel zur Einlass-Systemachse des Ventils angeordnet und über eine pulsierende Ringleitung zwischen der Schwingwand (21) und einem Ringkamm (41) des gerillten Ringes (38) mit der Einlass-Seite des Ventils verbindbar ist.

## Revendications

1. Vanne de remplissage d'un réservoir de chasse d'eau, ladite vanne comprenant un raccord (54) de tube d'entrée; un panier (49) au sein dudit raccord de tube (54); et une section de membrane (3) en aval du panier (49);
caractérisée en ce que
(a) ledit panier (49) comportant sur sa surface de paroi externe une pluralité de nervures (53) s'étendant axialement, disposées entre des fentes formées dans le panier; ledit panier comportant une extrémité en amont ouverte et une extrémité en aval fermée; et
(b) un manchon élastique (47) entourant ledit panier (49); ledit manchon élastique (47) étant doté sur sa surface de paroi externe d'une série de nervures s'étendant axialement, lesdites nervures reposant sur la surface cylindrique interne d'une section cylindrique (56) dudit raccord de tube (54);
ledit panier (49) et ledit manchon élastique (47) servant d'élément amortisseur de bruit.

2. Vanne selon la revendication 1 et dans laquelle ladite section de membrane (3) comprend à son extrémité en aval une base en forme de disque étagée (13) et à son extrémité en amont un anneau rainuré (38), un insert annulaire (36) et une membrane (21) étant disposés entre ledit anneau rainuré (38) et ladite base en forme de disque (13); et
un percuteur de membrane (22) qui est monté centralement dans la membrane (21) par verrouillage par formage;
l'agencement étant tel qu'un bouchon à vis (58), dans lequel ledit raccord de tube (54) s'étend, peut s'engager par vissage avec la base en forme de disque étagée (13) pour maintenir l'anneau rainuré (38), l'insert annulaire (36) et la membrane (21) en place entre ledit raccord de tube (54) et ladite base en forme de disque étagée(13).

3. Vanne selon la revendication 2, caractérisée en ce que le percuteur de membrane (22) est à une de ses extrémités guidé le long d'un pointeau situé centralement (30) fixé dans une section de disque (15) de la base en forme de disque étagée (13) et à l'autre extrémité guidé le long d'une projection annulaire (18) située sur une section de disque (15) de la base en forme de disque étagée (13) dans le même axe que le pointeau (30).

4. Vanne selon la revendication 3, caractérisée en ce que la base en forme de disque étagée (13) et la membrane (21) enferment une chambre de pression (60), qui, par un espace annulaire entre le pointeau (30) et un alésage central (27) du percuteur de membrane (22), est ouverte sur le raccord de tube (54), et par une projection de tube (61), qui fait saillie depuis la base en forme de disque étagée (13) dans une zone au-dessus d'une section de distribution (2), est ouverte sur l'extérieur de la vanne.

5. Vanne selon la revendication 2 ou 3, caractérisée en ce qu'une bordure arrondie interne de l'insert annulaire (36) et une gorge annulaire (42), qui est située sur la face orientée vers l'insert annulaire (36), de l'anneau rainuré (38) enferment une rainure annulaire (59), qui est reliée avec un passage de jonction (8) situé sur la hauteur d'une partie de couverture d'une section de distribution (2) parallèlement à l'axe du système d'entrée de la vanne et qui peut avec le côté d'entrée de la vanne être reliée par un passage annulaire intermittent entre la membrane (21) et une came annulaire (41) de l'anneau rainuré (38).
